(19) Europäisches Patentamt
European Patent Office
Office européen des brevets

(11) **EP 2 346 136 A1**

(12) **EUROPEAN PATENT APPLICATION**

(43) Date of publication:
**20.07.2011 Bulletin 2011/29**

(51) Int Cl.:
**H02J 5/00** (2006.01)  **H02J 7/02** (2006.01)

(21) Application number: **10150652.5**

(22) Date of filing: **13.01.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicant: **Universität Duisburg-Essen**
**45141 Essen (DE)**

(72) Inventors:
• **Jung, Peter**
**47051, Duisburg (DE)**

• **Bruck, Guido H.**
**46562, VOERDE (DE)**

(74) Representative: **Stöckeler, Ferdinand et al**
**Schoppe, Zimmermann, Stöckeler & Zinkler**
**Patentanwälte**
**Postfach 246**
**82043 Pullach bei München (DE)**

(54) **Apparatus for generating an alternating magnetic field and apparatus for providing an effective power from an alternating magnetic field**

(57)      An apparatus (100) for generating an alternating magnetic field having an effective power and comprising a first magnetic field component and a second magnetic field component, the apparatus (100) comprising a first inductive loop (110) for generating the first magnetic field component having a first amplitude and a first phase and a second inductive loop (120) for generating the second magnetic field component having a second amplitude and a second phase. The apparatus (100) further comprises a controller (130) being coupled to the first inductive loop (110) and being coupled to the second inductive loop (120) the controller (130) being configured for setting the first amplitude and the second amplitude and/or the first phase and the second phase to a first relation and to a second relation, the controller (130) being configured for selecting from the first relation and the second relation the relation in which the effective power of the magnetic field is higher.

Fig. 1a

EP 2 346 136 A1

**Description**

The present invention is in the field of wireless energy transfer or wireless charging, as, for example, can be used for charging of mobile devices as mobile phones, portable music players, portable computers, electric vehicles etc.

Wireless energy transfer, which is also termed wireless charging, has been a topic for several decades. A first commercial application was introduced in the form of an electric toothbrush which could be recharged in a cradle without the need for a further plug. The wireless charging was done by exploiting induction.

Present wireless charging systems may make use of proprietary solutions. Some of them may exploit near field induction. Some concepts may use resonant induction, which lends itself to high efficiency when compared to conventional induction.

Wireless charging devices may consist of a wireless device, as for example a cell phone, a car key, a presenter, a notebook, electric mobiles, etc., which needs to be recharged from time to time in a charging cradle or pad, which is connected to the electric circuit of the infrastructure, as for example a home AC plug (AC = alternating current), air plane, AC/DC (DC = direct current) network, automotive DC network, etc.

Wireless energy transfer has been subject to research activities for a long time. In the following, an overview of different possible realization concepts of wireless energy transfer will be given.

Wireless energy transfer or wireless power transmission is defined as the process which takes place in a given system where electrical energy is transmitted from an electrical energy source to an electrical load without using interconnecting wires between the source and the load. Wireless energy transfer is comfortable in those cases where instantaneous or continuous energy transfer is needed, but interconnecting wires are inconvenient, hazardous, or impossible.

Wireless energy transfer is different from wireless information transmission, by e.g. radio. In the latter, the signal-to-noise ratio (SNR), or the percentage of power received, becomes critical, if it is too low to successfully recover the signal. With wireless energy transfer, the efficiency, i.e. the ratio of the received energy and the emitted energy, is the more important parameter.

The most common form of wireless power transfer is based on using electrodynamic Inductive Power Transfer (IPT). Other viable technologies for wireless power include those based upon microwaves and lasers.

The history of wireless energy transfer dates back to the 1820s, the time when André-Marie Ampère described Ampere's law showing that electric current produces a magnetic field. Later, in the 1830s, Michael Faraday presented Faraday's law of induction, an important basic law of electromagnetism and in 1864, James Clerk Maxwell synthesized the previous observations, experiments and equations of electricity, magnetism and optics into a consistent theory, and mathematically models the behavior of electromagnetic radiation. In 1888, Heinrich Rudolf Hertz confirmed the existence of electromagnetic radiation. Hertz's "apparatus for generating electromagnetic waves" is generally acknowledged as the first radio transmitter. In the 1890s, Nikola Tesla improved on Hertz's primitive radio-frequency power supply. In 1894, Hutin and LeBlanc, espoused long held view that inductive energy transfer should be possible, they file a U.S. Patent describing a system for power transfer at 3 kHz. In the same year, Jagdish Chandra Bose ignited gunpowder, ringing a bell at a distance using electromagnetic waves and hence showing that communication signals can be sent without using wires.

In 1901, Guglielmo Marconi first transmitted and received signals across the Atlantic Ocean using Nikola Tesla's wireless energy transmitter. William C. Brown published an article that explores possibilities of microwave power transmission in 1961 and demonstrated a microwave powered model helicopter that received all the power needed for flight from a microwave beam in 1964. Between 1969 and 1975 Brown was technical director of a JPL Raytheon program that beamed 30 kW over a distance of 1 mile at 84% efficiency.

In 1971, Don Otto developed a small trolley powered by Inductive Power Transfer. The world's first passive RFID was demonstrated at the Los-Alamos National Lab in 1973. In 1975, Goldstone Deep Space Communications Complex did experiments in the tens of kilowatts.

In 1988, John Boys developed an inverter using novel engineering materials and power electronics and concluded that inductive power transmission should be achievable. A first prototype for a contact-less power supply was built. In 2004, IPT has been used by 90% of the US$1 billion clean room industry for materials handling equipment in semiconductor, LCD and plasma screen manufacture. In 2007, Marin Soljacic confirmed the earlier work of John Boys.

The size of the components may be dictated by the distance from transmitter to receiver, the wavelength and the Rayleigh criterion which applies to radio frequency (RF) as well as to coherent optical system. The Rayleigh Criterion dictates that any beam will spread and become weaker and diffuse over distance; the larger the transmitter antenna or laser aperture compared to the wavelength of radiation, the tighter the beam and the less it will spread as a function of distance. In addition to the Rayleigh criterion, Airy's diffraction limit is also frequently used to determine an approximate spot size at an arbitrary distance from the aperture.

The power levels are calculated, adding in the gains and losses due to the antenna characteristics and the transparency of the medium through which the radiation passes. That process is known as calculating a link budget.

Ultimately, beam width is physically determined by diffraction due to the dish size in relation to the wavelength of the electromagnetic radiation used to make the beam. Microwave power beaming can be more efficient than lasers, and is less prone to atmospheric attenuation caused by dust or water vapor losing atmosphere to vaporize the water in contact.

For further details on the history of power transmission, for example, William C. Brown, "The History of Power Transmission by Radio Waves", IEEE transactions on microwave theory and techniques, volume MTT-32, No. 9, September 1984 can be considered.

In the following near field aspects will be illuminated. The action of an electrical transformer is the simplest instance of wireless energy transfer. The primary and secondary circuits of a transformer are not directly connected. The transfer of energy takes place by electromagnetic coupling through a process known as mutual induction. The battery charger of a mobile phone or the transformers in the street are examples of how this principle can be used. The main drawback to induction, however, is the short range. The receiver must be very close to the transmitter or induction unit in order to inductively couple with it.

The electrodynamic inductive effect or resonant inductive coupling has key implications in solving the main problem associated with non-resonant inductive coupling and electromagnetic radiation; specifically, the dependence of efficiency on transmission distance. Electromagnetic induction works on the principle of a primary coil or loop generating a predominantly magnetic field and a secondary coil or loop being within that field so a current is induced in the secondary. This results in a relatively short range due to the amount of power required to produce an electromagnetic field. Over greater distances the non-resonant induction method is inefficient and wastes much of the transmitted energy.

This is where the resonance comes in and helps efficiency dramatically by "tunneling" the magnetic field to a receiver coil that resonates at the same frequency. If resonant coupling is used, where inductors are tuned to a mutual frequency and the input current is modified from a sinusoidal into a rectangular or transient waveform, significant power may be transmitted over a range of many meters. Unlike the multiple-layer secondary coils of a non-resonant transformer, such receiving coils are single layer solenoids with closely spaced capacitor plates on each end, which in combination allow the coil to be tuned to the transmitter frequency thereby eliminating the wide energy wasting "wave problem" and allowing the energy used to focus in on a specific frequency increasing the range.

An overview of resonant electromagnetic energy transfer can for example be found in Aristedis Karalis et al., "Efficient wireless non-radiative mid-range energy transfer", Annals of Physics 323, 2008, pages 34-38, Science Direct. An example for inductive and charging can be found in Phillips, "Wireless Charging for Mobile Devices", June 17, 2008 (http://www.research.phillips.com/technologies/projects/wireless-charging.html). Some more details on wireless charging can for example be found in Hiroki Yomogita, Nikkei Electronics, "Non-contact Charging System Simultaneously Charges Multiple Mobile Devices", 2008 and Davide Castelvecchi, "Wireless energy may power electronics", MIT Tech-Talk, volume 51, Number 9, November 15, 2006.

In the following far field concepts for wireless energy transfer will be illuminated. Far field methods achieve longer ranges, often multiple kilometer ranges, where the distance is much greater than the diameter of the device. The main reason for longer ranges is the fact that radiation in the far-field can be made to match the shape of the receiving area using high directivity antennas or well collimated Laser beam thereby delivering almost all emitted power at long ranges. The maximum directivity for antennas is physically limited by diffraction.

The earliest work in the area of wireless transmission via radio waves was performed by Thomas Edison in 1875. Later, Guglielmo Marconi worked with a modified form of Edison's transmitter. Nikola Tesla also investigated radio transmission and reception. Japanese researcher Hidetsugu Yagi also investigated wireless energy transmission using a directional array antenna that he designed. In February 1926, Yagi and Uda published their first paper on the tuned high-gain directional array now known as the Yagi antenna. While it did not prove to be particularly useful for power transmission, this beam antenna has been widely adopted throughout the broadcasting and wireless telecommunications industries due to its excellent performance characteristics.

Power transmission via radio waves can be made more directional, allowing longer distance power beaming, with shorter wavelengths of electromagnetic radiation, typically in the microwave range. A rectenna may be used to convert the microwave energy back into electricity. Rectenna conversion efficiencies exceeding 95% have been realized. Power beaming using microwaves has been proposed for the transmission of energy from orbiting solar power satellites to Earth and the beaming of power to spacecraft leaving orbit has been considered.

Power beaming by microwaves has the difficulty that for most space applications the required aperture sizes are very large due to diffraction limiting antenna directionality. For example, the 1978 NASA study of solar power satellites required a 1-km diameter transmitting antenna, and a 10 km diameter receiving rectenna, for a microwave beam at 2.45 GHz. These sizes can be somewhat decreased by using shorter wavelengths, although short wavelengths may have difficulties with atmospheric absorption and beam blockage by rain or water droplets. Because of the thinned array curse, it is not possible to make a narrower beam by combining the beams of several smaller satellites.

For earthbound applications a large area 10 km diameter receiving array allows large total power levels to be used while operating at the low power density suggested for human electromagnetic exposure safety. A human safe power density of 1 mW/cm$^2$ distributed across a 10 km diameter area corresponds to 750 megawatts total power level.

This is the power level found in many modern electric power plants.

Wireless Power Transmission using microwaves is well proven. Experiments in the tens of kilowatts have been performed at Goldstone in California in 1975 and more recently in 1997 at Grand Bassin on Reunion Island. These methods achieve distances on the order of a kilometer.

In the case of electromagnetic radiation closer to visible region of spectrum, power can be transmitted by converting electricity into a Laser beam that is then pointed at a solar cell receiver. This mechanism is generally known as PowerBeaming because the power is beamed at a receiver that can convert it to usable electrical energy.

Electrical energy can also be transmitted by means of electrical currents made to flow through naturally existing conductors, specifically the earth, lakes and oceans, and through the atmosphere — a natural medium that can be made conducting if the breakdown voltage is exceeded and the gas becomes ionized.

For example, when a high voltage is applied across a neon tube the gas becomes ionized and a current passes between the two internal electrodes. In a practical wireless energy transmission system using this principle, a high-power ultraviolet beam might be used to form a vertical ionized channel in the air directly above the transmitter and receiver stations. The same concept is used in virtual lightning rods, the electrolaser electroshock weapon and has been proposed for disabling vehicles. A global system for "the transmission of electrical energy without wires" that depends upon the high electrical conductivity of the earth was proposed by Nikola Tesla as early as 1904.

Some industrial activities have been carried out on short range wireless energy transfer techniques in the past. In 2004 Splashpower, a British technology firm, was citing "very strong" interest from consumer-electronics firms for its wireless charging pad. Based on the principle of electromagnetic induction that Faraday had discovered in the 19th century, the company's "Splashpad" contains a coil that generated a magnetic field when a current flowed through it. When a mobile device containing a corresponding coil was brought near the pad, the process was reversed as the magnetic field generated a current in the second coil, charging the device's battery without the use of wires. Unfortunately, although Faraday's principles of electromagnetic induction have stood the test of time, Splashpower has not - it was declared bankrupt in 2008 without having launched a single product.

Fulton Innovation, the eventual owner of Splashpower's assets, unveiled a number of products including an in-car console equipped with inductive coils that can wirelessly charge mobile devices while on the road in 2008. BMW reported that it will offer its 7 Series cars in South Korea with a wireless-recharging dock for one of Samsung's handsets. A modified toolbox from Bosch demonstrated the potential for wirelessly charging power tools.

Thanks to its simplicity and scalability, electromagnetic induction is still the technology of choice among many of the remaining companies in the wireless-charging arena. But, as Splashpower found, turning the theory into profitable practice is not straightforward. One of the main difficulties for companies has been persuading manufacturers to incorporate charging modules into their devices. But lately there have been some promising developments.

It shall be noted that in December 2008 the Wireless Power Consortium, a body dedicated to establishing a common standard for inductive wireless charging, and thus promoting its adoption has been formed. This consortium is modeled on a similar body that did the same for Bluetooth. The new consortium's members include big consumer-electronics firms, such as Philips and Sanyo, as well as Texas Instruments (TI).

Universal standards are considered the single most important requirement for the adoption of wireless charging. Philips is one of the few companies to have commercialized wirelessly charged devices - notably, electric toothbrushes and something it calls an "intimate dual massager". But a more collaborative approach is needed to ensure that different devices, such as mobile phones, laptops and digital cameras, can share the same charging equipment.

Recently, TI announced that it had joined forces with Fulton Innovations "to accelerate development of efficient wireless power solutions". The aim of reducing the cost and size of the components needed for wireless charging and making it easier for device-makers to incorporate them into their products quickly is a major asset of this cooperation.

In 2008, Palm introduced the Pre, a smart-phone from Palm. The Pre also has an optional charging pad, called the Touchstone, which uses electromagnetic induction to charge the device wirelessly. When the device is placed on the pad, the two recognize each other through built-in sensors. Magnets embedded in the pad align the handset and hold it in place during charging.

As wireless-charging equipment based on electromagnetic induction heads towards the market, a number of alternative technologies are also being developed to transmit power over both short and long distances. WildCharge, a start-up based in Colorado, has already started selling a number of wireless-charging devices that take a cheaper but simpler approach in which mobile devices make electrical contact with a special charging pad via four small conductive metal studs.

WildCharge and the licensees of its technology have developed replacement back covers for a number of popular devices, including Motorola's RAZR phones and video-game controllers for the Nintendo Wii and the Sony PlayStation 3. No matter how the device is plonked down, two of the bumps establish direct electrical contact with the pad. The firm has also developed special "skins" for Blackberry smart-phones, so that they too can be charged without the need for an adaptor.

In 2008, Bombardier offers new wireless transmission product PRIMOVE, a power system for use on trams and light-rail vehicles. In the same year, a team at Brunel University made a wireless light bulb powered by a high efficiency 3W LED.

Intel reproduced Nikola Tesla's 1894 implementation and John Boys group's 1988's experiments by wirelessly powering a light bulb with 75% efficiency.

In the following industrial activities in long range wireless energy transfer will be provided. At the other end of the spectrum is the idea of long-range transmission of wireless power, which could in principle do away with the need for a charging pad altogether. This technique uses the energy in radio waves, broadcast from a transmitter and harnessed by an antenna, to generate electricity. Using the passive-power principle found in crystal radios, the method has proved successful over short distances in places where it is difficult to replace batteries or carry out maintenance. The problem is that the intensity of the radio waves needed to charge mobile phones and laptop computers over long distances might be hazardous to human health, and regulators would be unlikely to approve.

Powercast, a firm based in Pittsburgh, Pennsylvania, has developed wireless-charging products that can do useful things while still operating at safe power levels. Over distances of less than 1.5 meters, its technology can be used to run low-power lighting systems; at a range of up to three meters, the radio waves can provide useful power for trickle-charging rechargeable batteries; and up to about 7.5 meters, they can be used to power wireless sensor networks. The firm talks of providing "milliwatts over meters" and "watts over centimeters".

Yet another approach is that taken by PowerBeam, a start-up based in Silicon Valley. It uses lasers to beam power from one place to another, but it too faces regulatory difficulties. The firm says the low power-density of its lasers and a series of safeguards ensures that human exposure remains within regulatory limits.

Essentially, the state of the art is characterized by, typically resonant, inductive near-field energy transfer, sometimes called "non-radiative electromagnetic field" approach. The principle was e.g. studied by John Boys in the 1980s and 1990s and was also used by Marin Soljacic (MIT). Soljacic's way, which is said to be used recently also by Intel, may however not be compliant with EMC requirements. Confined magnetic fields have been used by Philips, Splashpower, Mojo Mobility, Qualcomm and others. The advantage is the high amount of transferred energy and the high efficiency of up to approx. 95%, all need short wireless gaps (a few millimeters).

The second state of the art is to use radio wave (far field). Experiments go back to Edison, Marconi and Tesla; the principle is used by Nokia, also. The disadvantage is that there is no real resonance and low efficiency and the harvested energy is low (a few mW).

Therefore it is the object of the present invention to provide an improved concept for wireless energy transfer.

The object is achieved by an apparatus and method for generating an alternating magnetic field according to claims 1 and 9, and by an apparatus and method for providing an effective power from an alternating magnetic field according to claims 10 and 15.

It is a finding of the present invention that beam forming can be used in the near field, utilizing multiple coils or loop with phase shifted amplitude modulated stimuli. Moreover, it is one finding of the present invention that different frequencies, for example ranging from a few hundred kHz up to 13.56 MHz or more, can be used to achieve a good resonant matching. Moreover, it is a finding of the present invention that the coils or loop can be confined in metal housings to allow a better control of the field pattern. It is one finding that a magnetic field can be manipulated in a way that energy can be transferred in a more focused or efficient way, due to constructive superposition of multiple field components, evoked by different coils or loop. Moreover, it is a finding of the present invention that different frequencies can be used to charge different devices, at different positions respectively.

In other words, it is a finding of the present invention that a magnetic field can be manipulated by controlling multiple magnetic field components. Moreover, resonant modes or coupled modes can be used to charge mobile devices, i.e. in embodiments different mobile devices may utilize different resonant modes or frequencies. Furthermore, it is one finding that the charging of a mobile device can be controlled by selecting a respective frequency on the one hand, and by properly superimposing magnetic field components on the other hand. Embodiments may vary the "matching" to different secondary coils, i.e. battery powered devices to be recharged, and may allow beam steering.

It is a further finding of the present invention that communication between the device to be charged and the charger can enhance control of the charging process. For example, a low rate data transmission can be used for controlling and determining for example whether a battery powered device to be recharged is in the vicinity of the charger, messages may be transmitted, etc. Such communication may also be used to establish a charging control loop, i.e. the data transmission may be used for providing feedback from the device or apparatus to be charged to the device or apparatus providing the magnetic field for improving or optimizing the charging process, i.e. for enhancing the magnetic field at the position of the device to be charged.

Moreover, it is a finding of the present invention that such a charger or apparatus may be implemented inside a car, vehicle or airborne platform. Therewith, a mobile device may be charged whenever it is located, e.g. inside a car, a train, etc. It is a further finding of the present invention that any mobile device may be properly equipped with an embodiment and therewith charged wirelessly or be used to charge other devices. It is another finding that a charged mobile device may be used to generate a magnetic field, which in turn can be used to charge another mobile device.

Embodiments may provide the advantage that they can be used to charge mobile phones, electric vehicles, portable computers or notebooks, etc. Embodiments may exploit the coupled mode theory in order to increase the efficiency of the charging process. It is a further finding of the present invention that a magnetic field can be provided or generated in a spatially selective way. Embodiments may further provide the advantage that multiple devices may be charged at a time. Such devices may be charged simultaneously using the same frequency or different frequencies of the magnetic field. Embodiments may further provide the advantage that they may adapt to different devices, for example in terms of the frequency of the magnetic field and in terms of the superposition of the magnetic field components. Embodiments may provide energy in terms of a magnetic field in a spatially selective way.

Embodiments of the present invention will be detailed using the accompanying figures, in which

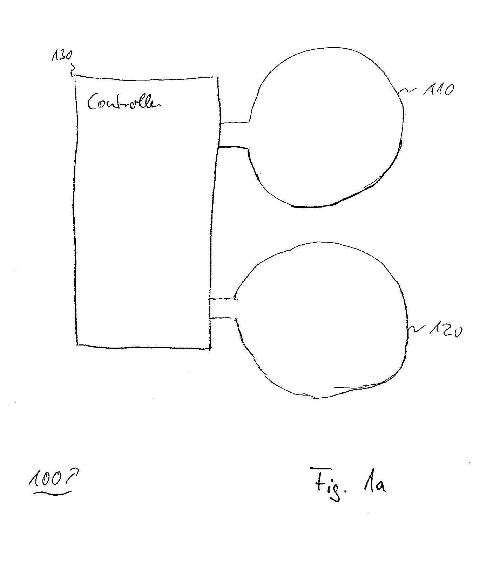

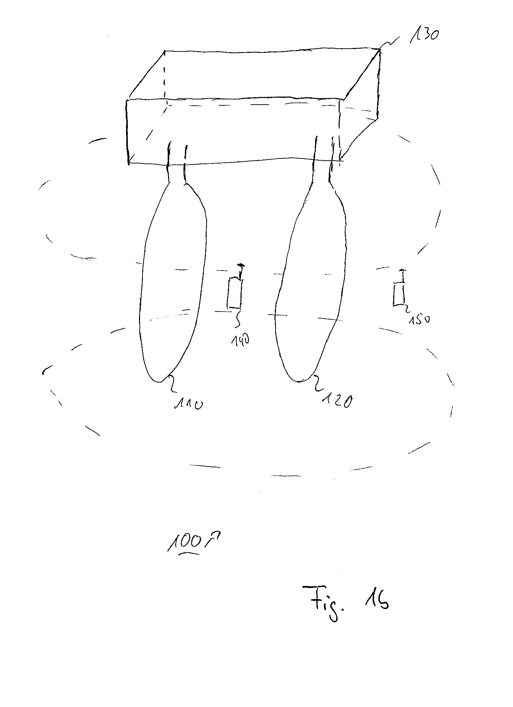

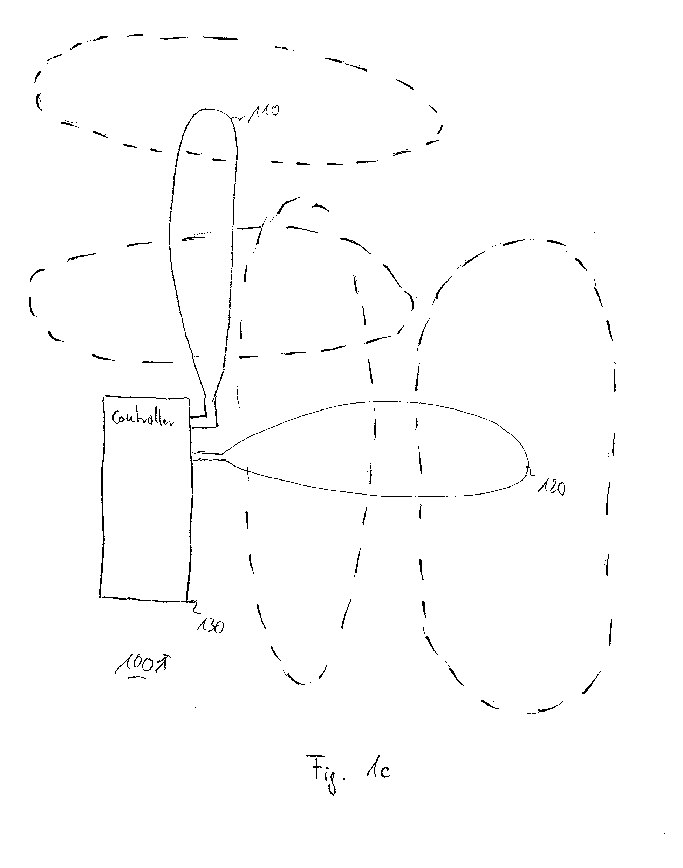

Fig. 1 a    shows an embodiment of an apparatus for generating an alternating magnetic field;

Fig. 1b    shows another embodiment of an apparatus for generating an alternating magnetic field;

Fig. 1 c    shows another embodiment of an apparatus for generating an alternating magnetic field;

Fig. 2a    shows an embodiment of an apparatus for providing an effective power from an alternating magnetic field;

Fig. 2b    shows another embodiment of an apparatus for providing an effective power from an alternating magnetic field,

Fig. 3a    illustrates a magnetic field generated by an embodiment using two parallel conductors;

Fig. 3b    illustrates superposition of magnetic field components using anti-parallel currents;

Fig. 3c    illustrates superposition of magnetic field components using parallel currents;

Fig. 3d    illustrates an embodiment of a resonance element;

Fig. 4a    shows an embodiment of an apparatus 100 implemented as a charging pad;

Fig. 4b    shows an embodiment of a single coil or inductive loop with a capacitor, with and without a metal core or ferrit core;

Fig. 4c    shows an embodiment of a coil or an inductive loop having a metal housing; and

Fig. 4d    shows an embodiment of a coil or an inductive loop having a metal or ferrit core and a metal housing.

In the following the expressions of coil, loop, inductive coil or inductive loop, etc. will be used synonymously. Furthermore, in the following embodiments only a single loop may be exemplified per coil, where embodiments shall not be limited to a single loop, but may utilize multiple loop per coil.

Fig. 1a shows an embodiment of an apparatus 100 for generating an alternating magnetic field having an effective power and comprising a first magnetic field component and a second magnetic field component. The apparatus 100 comprises a first inductive loop 110 for generating the first magnetic filed component having a first amplitude and a first phase. Moreover, the apparatus 100 comprises a second inductive loop 120 for generating the second magnetic field component having a second amplitude and a second phase. The embodiment of the apparatus 100 further comprises a controller 130 being coupled to the first inductive loop 110 and being coupled to the second inductive loop 120. The controller 130 being configured for setting the first amplitude and the second amplitude and/or the first phase and the second phase to a first relation and to a second relation. The controller 130 being configured for selecting from the first relation and the second relation the relation for which the effective power of the magnetic field is higher.

In other words, in embodiments the controller 130 can be configured or adapted for setting the first and second amplitudes and/or the first and second phases to a relation in which the effective power of the magnetic field is higher compared to when the first and second amplitudes and/or the first and second phases were set to a different relation.

It is to be noted that the first relation is different from the second relation. The first and second relations may involve setting the first and second amplitudes and the first and second phases in an absolute or relative manner. In embodiments such settings may be carried out relatively, i.e. the first and second amplitudes may be offset by a certain value and the first and second phases may be offset by another certain value, either the amplitude or the phases may be offset respectively. The controller 130 can be configured for evaluating such settings in an iterative or stepwise manner, i.e. the controller 130 may try the settings and select the one for which the effective power is higher.

As shown in Fig. 1a the first inductive loop 110 and the second inductive loop 120 face the same direction or have the same orientation. In other words, according to the setting shown in Fig. 1a the magnetic field components created by the first inductive loop 110 and the second inductive loop 120 may have the same direction or orientation in the plane depicted in Fig. 1a. In embodiments, different orientations of the first inductive loop 110 and the second inductive loop 120 may be used. Generally embodiments are not limited to a certain relative orientation between the first and second inductive loops 110;120.

Fig. 1b shows another embodiment of an apparatus 100 for generating an alternating magnetic field. Fig. 1b shows the first inductive loop 110, the second inductive loop 120 and the controller 130. As indicated in Fig. 1b, the first inductive loop 110 and the second inductive loop 120 face similar directions, however the layout is different. In the embodiment shown in Fig. 1b the first inductive loop 110 and the second inductive loop 120 are stacked. In such a setup, a device to be charged, which is exemplified as device 140 in Fig. 1b may be placed between the first and second inductive loop 110; 120. Such an embodiment may be implemented in a garage, in a cabin or a compartment in a train, in a table and a ceiling above, in the floor and ceiling of a carport, etc.

In other embodiments, the first and second inductive loop 110; 120 may be stacked, however the device to be charged may not be placed between the loops or coils as indicated by the device 150 in Fig. 1b.

Yet another embodiment of the apparatus 100 is shown in Fig. 1c. In Fig. 1c the apparatus again comprises the first inductive loop 110, the second inductive loop 120 and the controller 130. As indicated in Fig. 1c, now the first inductive loop 110 and the second inductive loop 120 have different orientations, in some embodiments they may be orthogonal. Therewith, the controller 130 can control the direction or orientation of the resulting magnetic field.

The superposition of the magnetic field components will be discussed in more detail subsequently.

In embodiments, the controller 130 can be further configured for controlling the alternating magnetic field by setting a first frequency and a second frequency for the alteration and for selecting from the first frequency and the second frequency the frequency for which the effective power of the alternating magnetic field is higher.

In other words, in embodiments the controller 130 can be adapted for choosing a relation with respect to the first and second amplitudes and the first and second phases such that the effective power is higher than the minimum achievable. Consequently, the controller 130 may adapt the geometry, e.g. in terms of direction or orientation of the respective field vector, of the resulting magnetic field to a device which is to be charged in a way that the effective power, i.e. the charging of the device, is optimized. In a simple embodiment, the controller 130 may choose between only two relations. In more enhanced embodiments, the controller 130 may be adapted for adaptively controlling amplitudes and phases and therefore optimizing the effective power transferred through the magnetic field to the mobile device. The controller 130 may be configured for iteratively controlling the superposition of the field components, e.g. in terms of a stepwise control.

Moreover, the controller 130 can be adapted for selecting a proper frequency for the alternating magnetic fields in order to, for example, match a resonant mode of the mobile device, its charging circuit respectively. In a simple embodiment the controller 130 can be configured for choosing between only two frequencies. The controller 130 may then be configured for selecting from the two frequencies the one for which the effective power of the alternating magnetic field is higher, i.e. the one which is closer to or more efficiently matches the resonant mode of the mobile device. In a more enhanced embodiment the controller 130 can be configured for adaptively controlling the frequency of the alternating magnetic field, in order to optimize or maximize the effective power transferred through the alternating magnetic field to the mobile device. The controller 130 may be configured for iteratively controlling the frequency and for selecting a frequency for the alternating magnetic field for which the effective power of the magnetic field is higher than a minimum. The controller 130 may be configured for controlling the magnetic field iteratively.

In other words, in an embodiment the controller 130 can be configured for adapting the frequency of the alternating magnetic field as well as the amplitudes and phases of the magnetic components in a way, that an effective power transferred to a mobile device is optimized or maximized. In embodiments the controller 130 can be configured for selecting between at least two settings.

In embodiments, the apparatus 100 may further comprise a first capacity coupled to the first inductive loop 110 and/or a second capacity coupled to a second inductive loop 120. In other words, in embodiments the apparatus 100 may comprise one or two resonant circuits or oscillatory circuits.

In some embodiments the first inductive loop 110 and/or the second inductive loop 120 may be further shielded by a metal or ferrit shielding. The first inductive loop 110 and/or the second inductive loop may further comprise a metal or ferrit core.

In embodiments the apparatus 100 can comprise a plurality of inductive loops and the controller 130 can be coupled to each of the plurality of inductive loops. The controller 130 may be further configured for setting the plurality of amplitudes and phases, one for each of the plurality of inductive loops, to the first relation and to the second relation. The controller 130 may be configured for selecting from the first relation and the second relation the relation for which the effective power of the alternating magnetic field is higher. In other words, in embodiments the controller 130 may be coupled to a plurality of inductive loops or coils, which it may be able to control independently. The controller 130 may select a certain setting of amplitudes and phases for the plurality of inductive loop such that the effective power transferred through the magnetic field to a mobile device for charging is optimized or maximized, generally higher than a minimum. The plurality of inductive loops or coils may be arranged in an arbitrary setup, in an array form, e.g. in linear, circular, rectangular, triangular, etc. setup, in a 3-dimensinal array, with the loops or coils may have similar orientations or different orientations.

In embodiments a controller 130 can be configured for setting such a plurality of amplitudes and phases dependent on one or more power consuming inductive loop located in the alternating magnetic field. In other words, in an embodiment, a controller 130 may sense that there is a mobile device in the magnetic fields, consuming power. The controller 130 may then be configured to adjust amplitudes, phases and frequency of the plurality of inductive loops such that the effective power transferred to the mobile device is , basically, higher than a minimum, or as high as possible.

In embodiments, the apparatus 100 may further comprise means for communicating with a mobile device, which is to be charged. In embodiments such means for communication may determine that a mobile device is present, it may even be used to transfer information on certain charging parameters, as, for example, a frequency of a resonant mode of the mobile device. In embodiments the means for communicating may be configured for receiving feedback information on an effective power drawn from the magnetic field from a mobile device. Such information may enable a control loop for improving the effective power transferred, i.e. the controller 130 may be configured for adapting the magnetic field components based on the feedback.

As indicated in Figs. 1a and 1b, in embodiments the first inductive loop 110 and the second inductive loop 120 may face similar geometrical directions and/or according to Fig. 1c the first inductive loop 110 and the second inductive loop 120 may face different geometrical directions.

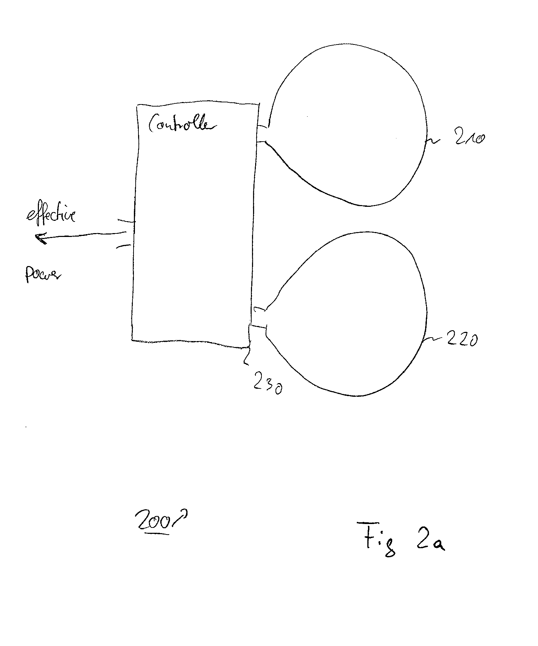

In the following, embodiments of an according apparatus 200 for providing an effective power from an alternating magnetic field will be detailed. A first embodiment of an apparatus 200 is shown in Fig. 2a. As can be seen in Fig. 2a the embodiment of the apparatus 200 comprises a first inductive loop 210 for providing a first voltage signal having a first amplitude and a first phase from the alternating magnetic field. Moreover, the apparatus 200 comprises a second inductive loop 220 for providing a second voltage signal having a second amplitude and a second phase from the alternating magnetic field. Moreover, the apparatus 200 comprises a controller 230 being coupled to the first inductive loop 210 and being coupled to the second inductive loop 210. The controller 230 can be configured for combining the first and second voltage signals using a first relation for the first and second amplitudes and/or for the first and second phases and for using a second relation for the first and second amplitudes and/or the first and second phases. The controller 230 can be configured for selecting from the first and second relation the relation in which the effective power is higher.

Similar to what was explained above with respect to the apparatus 100, the apparatus 200 may operate multiple inductive loops or coils. The apparatus 200 may be implemented in a mobile device, which is to be charged. Again, embodiments of the apparatus 200 may be using different directions or orientation for the first and second inductive loops 210;220. In the embodiment shown in Fig. 2a the first inductive loop 210 and the second inductive loop 220 face similar geometric directions. In other embodiments, of which one is illustrated in Fig. 1b, the first inductive loop 210 and the second inductive loop 220 may face different geometric directions. In some embodiments they may face orthogonal directions. Generally, arbitrary direction or orientations for the inductive loops may be chosen in embodiments.

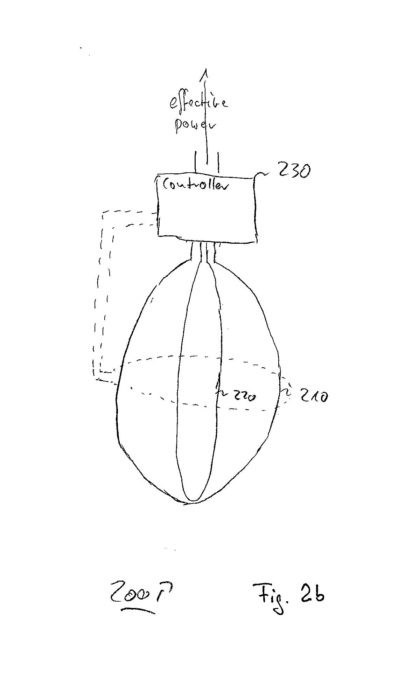

Fig. 2b shows another embodiment of the apparatus 200 comprising a first inductive loop 210, a second inductive loop 220 and a controller 230. As can be seen in Fig. 2b, the spatial directions or orientations of the inductive loops is changed as compared to Fig. 2a. In embodiments, the arrangement of inductive loops according to Fig. 2a may be used to beneficially combine two signals retrieved from a magnetic field basically from components facing similar directions. A setup as shown in Fig. 2b, may be used to combine signals obtained from magnetic field components facing different directions or magnetic field components.

In embodiments, the apparatus 200 may further comprise a first capacity being coupled to the first inductive loop 210 and/or a second capacity being coupled to the second inductive loop 220. In other words, the apparatus 200 may comprise a first resonant or oscillatory circuit and/or a second resonant or oscillatory circuit.

Generally, embodiments of the apparatus 200 may not be limited to only two inductive loops. Therefore, in embodiments the apparatus 200 may comprise a plurality inductive loops each configured for providing a voltage signal from the alternating magnetic field having an amplitude and a phase. The controller 230 can be coupled to each of the plurality of inductive loop and the controller 230 can be configured for setting the plurality of amplitudes and phases to the first and second relation, and for selecting from the first and second relation the one for which the effective power is higher, basically higher than a minimum. The controller 230 can be configured for selecting or adapting the signals adaptively, iteratively in a stepwise manner.

As already mentioned in an embodiment the apparatus 200 may be implemented in a mobile device, as for example a mobile phone, a laptop, a notebook, a PDA, a portable music player, an electric vehicle, etc.

In other embodiments, an apparatus 200 may be implemented as an external device, for example as a charging device. Such a charging device may be realized as a hanger, key chain, key pendant, keyring pendant or similar, which can be coupled to, for example, a mobile device. In such an embodiment, the apparatus 200 may be adapted for charging the respective device whenever an alternating magnetic field is present.

According to the above description, the apparatus 100 and the apparatus 200 may be configured to operate together in an optimized way. In other words, for example the resonant or oscillatory circuits may be chosen in a way such that they have a common resonant or oscillatory frequency.

Another embodiment may comprise an apparatus 100 and an apparatus 200 in one device, where the inductive loops may be shared. In other words, one embodiment may correspond to a device comprising an apparatus 100 for generating a magnetic field and may therewith charge other devices. Moreover, the device may comprise an embodiment of the apparatus 200 and may therewith also be charged by another device.

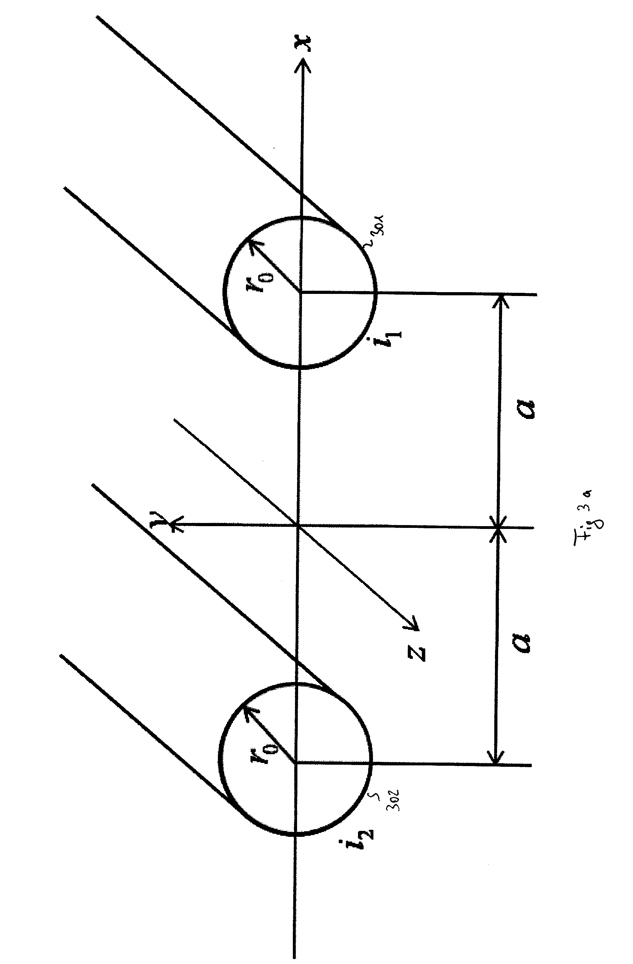

In the following the concept of beam forming with respect to the magnetic field components will be described. In other words, the respective controllers 130; 230 can generate or exploit the magnetic field by choosing the respective phases and amplitudes of the components in a certain way. Fig. 3a illustrates two conductors, which are displayed in a Cartesian coordinate system having directions $x$, $y$, $z$. The two conductors 301 and 302 are located in the plane $y=0$. The two conductors 301 and 302 are located with a distance $a$ from the origin of the coordinate system. Both conductors have a radius of $r_0$. In order to demonstrate the effects, two infinite conductors are assumed. The distance between the two conductors is $2a$ and they are located symmetrically to the origin of the Cartesian coordinate system. In conductor 301 on the right hand side a current of $i_1$ is assumed. In conductor 302 on the left hand side a current of $i_2$ is assumed. The two conductors run in parallel to the z-axis of the coordinate system.

In the following, the excitation of the magnetic field in the plane $y=0$ is considered, in which the magnetic field vectors, which are evoked by the two currents $i_1$ and $i_2$ only have components in the y-direction, cf. Biot-Savart's law. In the following, only the $y$ components are considered. The conductor 301 evokes

$$H_{1y} = \frac{i_1}{2\pi r_0} \cdot \frac{r_0}{x-a}, \quad |x-a| \geq r_0, \tag{1}$$

which refers to the outside of the conductor and

$$H_{1y} = \frac{i_1}{2\pi r_0} \cdot \frac{x-a}{r_0}, \quad |x-a| < r_0, \tag{2}$$

which refers to the inside of the conductor.

Consequently, the conductor 302 evokes

$$H_{2y} = \frac{i_2}{2\pi r_0} \cdot \frac{r_0}{x+a}, \quad |x+a| \geq r_0, \tag{3}$$

outside the conductor 302, and

$$H_{2y} = \frac{i_2}{2\pi r_0} \cdot \frac{x+a}{r_0}, \quad |x+a| < r_0, \tag{4}$$

 inside the conductor.

The resulting excitation can be expressed by

$$H_y = H_{1y} + H_{2y}$$

$$= \frac{1}{2\pi r_0} \cdot \begin{cases} i_1 \cdot \dfrac{r_0}{x-a} + i_2 \cdot \dfrac{r_0}{x+a}, & x < -a - r_0 \\[2ex] i_1 \cdot \dfrac{r_0}{x-a} + i_2 \cdot \dfrac{x+a}{r_0}, & -a - r_0 \le x \le -a + r_0 \\[2ex] i_1 \cdot \dfrac{r_0}{x-a} + i_2 \cdot \dfrac{r_0}{x+a}, & -a + r_0 < x < a - r_0 \\[2ex] i_1 \cdot \dfrac{x-a}{r_0} + i_2 \cdot \dfrac{r_0}{x+a}, & a - r_0 \le x \le a + r_0 \\[2ex] i_1 \cdot \dfrac{r_0}{x-a} + i_2 \cdot \dfrac{r_0}{x+a} & a + r_0 < x \end{cases} \qquad (5)$$

For the case of parallel currents, i.e. currents which are in phase with

$$i_2 = i_1 = i \qquad\qquad (6)$$

yields

$$H_y = \frac{i}{2\pi r_0} \cdot \begin{cases} \dfrac{r_0}{x-a} + \dfrac{r_0}{x+a}, & x < -a-r_0 \\[2mm] \dfrac{r_0}{x-a} + \dfrac{x+a}{r_0}, & -a-r_0 \leq x \leq -a+r_0 \\[2mm] \dfrac{r_0}{x-a} + \dfrac{r_0}{x+a}, & -a+r_0 < x < a-r_0 \\[2mm] \dfrac{x-a}{r_0} + \dfrac{r_0}{x+a}, & a-r_0 \leq x \leq a+r_0 \\[2mm] \dfrac{r_0}{x-a} + \dfrac{r_0}{x+a} & a+r_0 < x \end{cases}$$

$$= \frac{i}{2\pi r_0} \cdot \begin{cases} \dfrac{2r_0 x}{x^2 - a^2}, & x < -a-r_0 \\[2mm] \dfrac{\left(r_0\right)^2 + x^2 - a^2}{r_0\left(x-a\right)}, & -a-r_0 \leq x \leq -a+r_0 \\[2mm] \dfrac{2r_0 x}{x^2 - a^2}, & -a+r_0 < x < a-r_0 \\[2mm] \dfrac{\left(r_0\right)^2 + x^2 - a^2}{r_0\left(x+a\right)}, & a-r_0 \leq x \leq a+r_0 \\[2mm] \dfrac{2r_0 x}{x^2 - a^2}, & a+r_0 < x \end{cases} \quad . \tag{7}$$

For the case of anti-parallel currents, i.e. for currents with a 180° phase shift with

$$i_2 = -i_1 = i \tag{8}$$

yields

$$H_y = \frac{i}{2\pi r_0} \cdot \begin{cases} -\dfrac{r_0}{x-a} + \dfrac{r_0}{x+a}, & x < -a-r_0 \\[2mm] -\dfrac{r_0}{x-a} + \dfrac{x+a}{r_0}, & -a-r_0 \leq x \leq -a+r_0 \\[2mm] -\dfrac{r_0}{x-a} + \dfrac{r_0}{x+a}, & -a+r_0 < x < a-r_0 \\[2mm] -\dfrac{x-a}{r_0} + \dfrac{r_0}{x+a}, & a-r_0 \leq x \leq a+r_0 \\[2mm] -\dfrac{r_0}{x-a} + \dfrac{r_0}{x+a} & a+r_0 < x \end{cases}$$

$$= \frac{i}{2\pi r_0} \cdot \begin{cases} \dfrac{2r_0 a}{a^2-x^2}, & x < -a-r_0 \\[2mm] -\dfrac{\left(r_0\right)^2 - x^2 + a^2}{r_0\left(x-a\right)}, & -a-r_0 \leq x \leq -a+r_0 \\[2mm] \dfrac{2r_0 a}{a^2-x^2}, & -a+r_0 < x < a-r_0 \\[2mm] +\dfrac{\left(r_0\right)^2 - x^2 + a^2}{r_0\left(x+a\right)} & a-r_0 \leq x \leq a+r_0 \\[2mm] \dfrac{2r_0 a}{a^2-x^2}, & a+r_0 < x \end{cases} \qquad . \qquad (9)$$

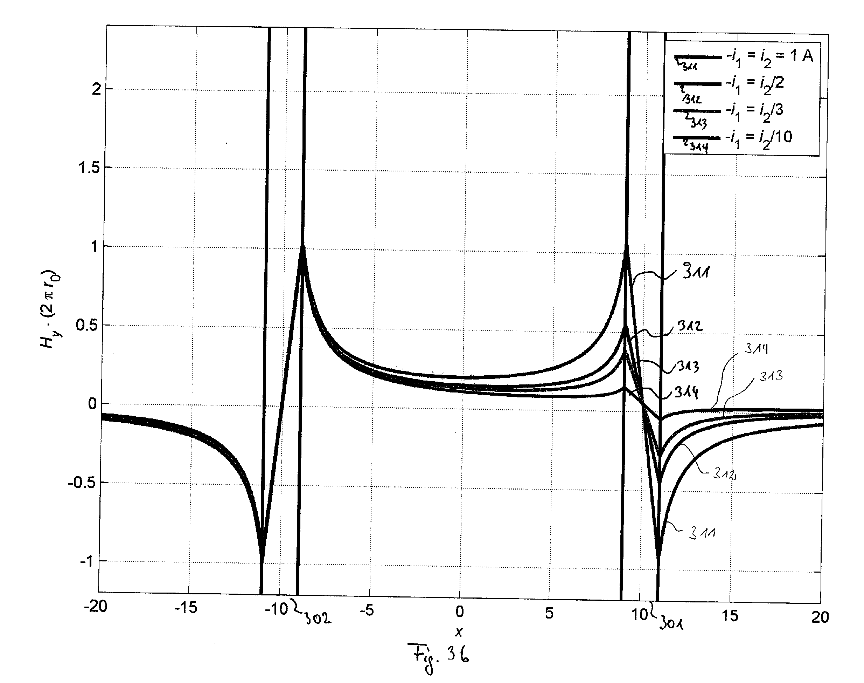

Fig. 3b illustrates the $y$ component of the magnetic field versus the $x$-coordinate. Fig. 3b shows the case for anti-parallel currents, i.e. for phase shift of 180°, having different amplitude relations, i.e. $-i1/i_2=\{1,1/2,1/3,1/10\}$. The view graphs shown in Fig. 3b are further labeled by reference signs 311, 312, 313 and 314. The view graph 311 shows the case for anti-parallel currents of the same magnitude. It can be seen, that between the two conductors 301 and 302 the magnetic field is non-vanishing, even when the magnitude of the current in conductor 301 is reduced, as indicated by view graph 312 for $-i1/i2=1/2$, by the view graph 313 for $-i1/i2=1/3$ and by view graph 314 for $-i1/i2=1/10$. Fig. 3b therewith illustrates how the amplitude of the current in conductor 301 influences the y-component of the magnetic field and therewith the potential effective power which can be transferred to another conductor between the two conductors 301 and 302 by induction according to Lenz's law.

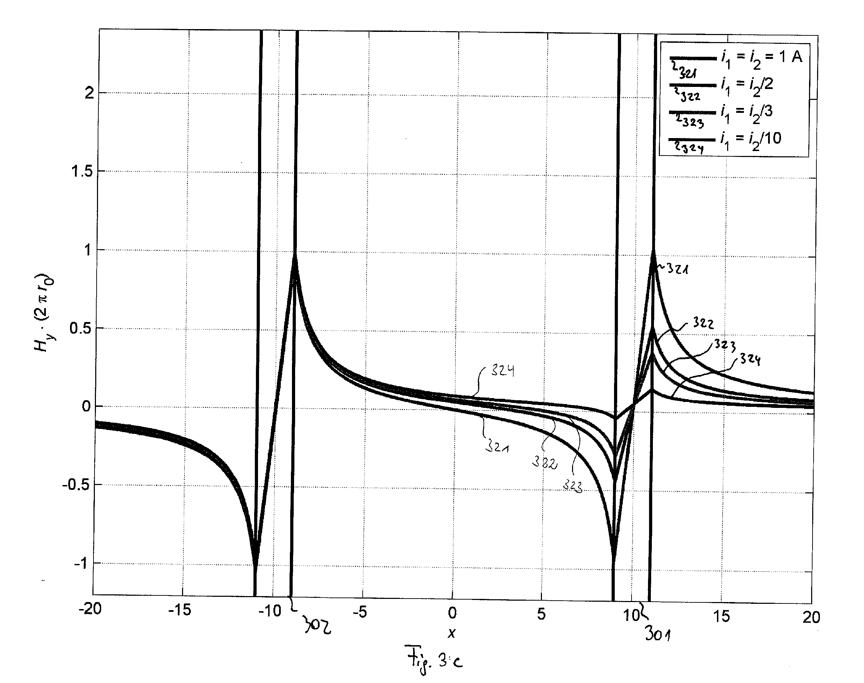

In order to also demonstrate the influence of the phases of the currents in the conductors 301 and 302 Fig. 3c illustrates a similar view graph, however, for parallel currents. View graph 321 shows the y-component of the magnetic field for parallel or in-phase currents $i_1$ and $i_2$ with the same magnitude. View graph 322 illustrates the case for $i_1/i_2=1/2$, the view graph 323 illustrates the case for $i_1/i_2=1/3$ and view graph 324 illustrates the case for $i_1/i_2=1/10$. It can be seen, that now between the two conductors there is a point, where the y-component of the magnetic field vanishes. For the case of equal currents this is in the center between two conductors 301 and 302 as shown by view graph 321. The lesser the amplitude of the current in the conductor 301 the closer this point moves towards the conductor 301, as indicated by view graphs 322, 323 and 324. In other words, comparing Figs. 3b and 3c, it can be seen that the amplitudes and phases of the currents in the two conductors 301 and 302 affect the magnetic field in between.

According to embodiments, the amplitudes and the phases of, for example, the currents in inductive loops 110; 120 can be manipulated by the controller 130 in a way that a magnetic field component is strong at a location and frequency of a device to be charged, its inductive loop or coil respectively. Similar considerations apply to embodiments of the apparatus 200, where the voltage signals in the inductive loops 210;220 may be induced from the alternating magnetic field according to Lenz's law. The voltage signals induced may them be combined by the controller 230 in a way that the effective power is higher than a minimum, as high as possible respectively. The controller 230 may be configured for adapting a resonance frequency of an oscillatory circuit, which may comprise the an inductive loop 210; 220, so to improve the effective power drawn from the alternating magnetic field, e.g. by adapting the capacities or loops/ coils..

In the following the wireless energy transfer coupled mode theory will be introduced. The magnetic field can be expressed as a vector field, namely as

$$\mathbf{F}(x,t) \approx a_1(t)\mathbf{F}_1(x) + a_2(t)\mathbf{F}_2(x) \qquad (10)$$

wherein $\mathbf{F}_1(x)$ represents the vector field evoked by the Eigenmode of object 1, $\mathbf{F}_2(x)$ represents the vector field evoked by the Eigenmode of object 2. The superimposed field $\mathbf{F}(x,t)$ is proportional to the two Eigenmodes of object 1 and object 2, where the field amplitudes correspond to $a_1(t)$ and $a_2(t)$.

Differentiation of the field amplitude yields

$$\frac{da_1(t)}{dt} = -j(\omega_1 - j\Gamma_1)a_1(t) + j\kappa a_2(t)$$
$$\frac{da_2(t)}{dt} = -j(\omega_2 - j\Gamma_2)a_2(t) + j\kappa a_1(t) \qquad (11)$$

wherein $\omega_1$ and $\omega_2$ correspond to the Eigenfrequencies of objects 1 and 2, $\Gamma_1$ and $\Gamma_2$ correspond to the resonance width, and $\kappa$ corresponds to the coupling coefficient.

In case of exact resonance the two Eigenfrequencies as well as the two resonance widths are equal, i.e.

$$\begin{aligned} \omega_1 = \omega_2 = \omega \\ \Gamma_1 = \Gamma_2 = \Gamma \end{aligned} \qquad (12)$$

For the resonance case, further differentiation yields the wave equations, thus

$$\frac{d^2 a_1(t)}{dt^2} = -\left[(\omega - j\Gamma)^2 + \kappa^2\right]a_1(t) + 2\kappa(\omega - j\Gamma)a_2(t)$$
$$\frac{d^2 a_2(t)}{dt^2} = -\left[(\omega - j\Gamma)^2 + \kappa^2\right]a_2(t) + 2\kappa(\omega - j\Gamma)a_1(t) \qquad (13)$$

In equation 13 the homogenous part

$$\frac{d^2 a_1(t)}{dt^2} = -\left[(\omega - j\Gamma)^2 + \kappa^2\right]a_1(t)$$

can be distinguished from the part which is evoked by the coupling effect. The first summand

$$-\left[\left(\omega-j\Gamma\right)^2+\kappa^2\right]a_1(t)$$ after the equal sign corresponds to the homogenous part, since it is only dependent on the respective same field amplitude.

The factor of $2\kappa$ equals the split factor in normal mode, and determines the second summand $(\omega - j\Gamma)a_2(t)$ in the above equation 13, which is due to the coupling effect and depends on the corresponding other field amplitude.

According to the above equations, a nearly perfect energy exchange can be achieved in time $\approx \pi / (2\kappa)$. When the coupling is strong the optimum figure of merit yields according to

$$\frac{\kappa}{\sqrt{\Gamma_1 \Gamma_2}} >> 1 \ . \tag{14}$$

When the Q-factor (Q=Quality) of the resonant mode is high,

$$Q = \omega / (2\Gamma), \tag{15}$$

i.e. for low $\Gamma$, which corresponds to low intrinsic-loss rates, i.e. the evanescent (nonlossy) stationary near field, the energy transfer can be optimal.

Also, a strong or fast coupling rate $\kappa$ can be achieved over distances larger than the characteristic sizes of the objects. The extent of the near field into the air surrounding a finite-sized resonant object is set typically by the wavelength $\lambda$, this mid-range non-radiative coupling can only be achieved using resonant objects of subwavelength size, and thus significantly longer evanescent field-tails. The resonant source object can in practize be implemented immobile, so in embodiments it may be chosen large enough such that the near-field extent is not limited by the wavelength $\lambda$, for example by using guided modes tuned close to the light line in the air. As mentioned above, metal or ferrit shielding may also be used.

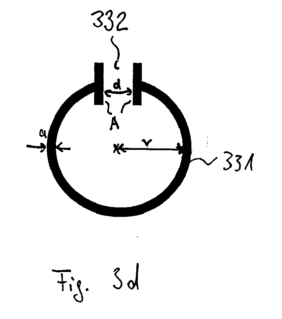

Fig. 3d illustrates an embodiment of a resonance element as it may be used in an embodiment. Fig. 3d shows a loop or coil with a capacitor. According to the geometry of the loop, i.e. r corresponds to the loop radius, $\mu_0$ corresponds to the magnetic permeability, a corresponds to the loop thickness, the loop inductance can be expressed as

$$L = \mu_0 r \left[ 1n\left(\frac{8r}{a}\right) - 2 \right]. \tag{16}$$

Assuming that $\varepsilon_0$ corresponds to the electric permittivity, $\varepsilon_r$ corresponds to the relative dielectric permittivity, $A$ corresponds to the area of the plates, and $d$ corresponds to the distance of the plates, the capacity of the plate capacitor as indicated in Fig. 3d yields

$$C = \varepsilon_0 \varepsilon_r \frac{A}{d}. \tag{17}$$

Therewith, the resonance frequency can be expressed as

$$\omega = \frac{1}{\sqrt{LC}} = \frac{1}{\sqrt{\mu_0 \varepsilon_0}} \cdot \frac{1}{\sqrt{r\left[1n\left(\frac{8r}{a}\right) - 2\right]}} \cdot \frac{1}{\sqrt{\varepsilon_r}} \cdot \frac{1}{\sqrt{\frac{A}{d}}} , \qquad (18)$$

where the loop geometry is represented in the factor

$$\frac{1}{\sqrt{r\left[1n\left(\frac{8r}{a}\right) - 2\right]}} , \qquad (19)$$

the capacitor material is represented by the factor

$$\frac{1}{\sqrt{\varepsilon_r}} , \qquad (20)$$

and the capacitor geometry is considered by the factor

$$\frac{1}{\sqrt{\frac{A}{d}}} . \qquad (21)$$

With σ representing the conductivity, ohmic losses can be expressed by

$$R_{ohmic} = \sqrt{\frac{1}{2}\sqrt{\frac{\mu_0}{\varepsilon_0}} \cdot \sqrt{\frac{\omega}{\sigma}} \cdot \frac{r}{a}} . \qquad (22)$$

Radiation losses can be represented by

$$R_{radiation} = \frac{\pi}{6}\sqrt{\frac{\varepsilon_0}{\mu_0}} \cdot \left(\frac{r}{\lambda}\right)^4 . \qquad (23)$$

The quality measures or Q-factors can also be expressed by

$$Q_{ohmic} = \frac{\omega L}{R_{ohmic}} = \frac{\sqrt{2\mu_0}}{\sqrt{\sqrt{\frac{\mu_0}{\varepsilon_0}}}} \cdot a \left[ ln\left(\frac{8r}{a}\right) - 2 \right] \cdot \sqrt{\omega\sigma} \qquad (24)$$

for the ohmic quality measure and

$$Q_{radiation} = \frac{\omega L}{R_{radiation}} = \frac{6\mu_0}{\pi} \sqrt{\frac{\mu_0}{\varepsilon_0}} \cdot \frac{\left[ ln\left(\frac{8r}{a}\right) - 2 \right]}{r^3} \cdot \omega\lambda^4 \qquad (25)$$

for the radiation quality measure. By tuning the capacitance and thus the resonance frequency, the total quality factor Q may be optimized or become highest for some optimal frequency determined by the loop parameters. In other words, the Q-factors are dominated at low frequencies by ohmic losses and at high frequencies by radiation losses.

The mutual inductance $M$ for a spacing of D, i.e. *D=2a* according to Fig. 3a, wherein the first inductive loop having a radius of $r_1$ and the second inductive loop having a radius of $r_2$, becomes

$$M = \frac{\pi}{2\mu_0} \cdot \frac{1}{(r_1)^2} \cdot \frac{1}{(r_2)^2} \cdot D^3 . \qquad (26)$$

The coupling coefficient becomes

$$\kappa = \frac{1}{2} \cdot \frac{1}{\sqrt{L_1}} \cdot \frac{1}{\sqrt{L_2}} \cdot M \cdot \omega$$
$$= \frac{\pi}{4\mu_0} \cdot \frac{1}{\sqrt{L_1}} \cdot \frac{1}{\sqrt{L_2}} \cdot \frac{1}{(r_1)^2} \cdot \frac{1}{(r_2)^2} \cdot D^3 \cdot \omega \qquad (27)$$

Therewith, a strong coupling can be achieved in embodiments. Embodiments may use beam forming, for example, in terms of adaptive beam forming in the near field using multiple coils or loops with phase shifted and/or amplitude modulated stimuli of frequencies, for example, starting at a few hundred kHz up to 14 MHz to achieve good resonant matching. Wave guides in terms of metallic or ferrit shieldings may be used in the source object, i.e. an embodiment of the apparatus 100.

As mentioned above, embodiments may use low data rate transmission which can in embodiments be embedded for control purposes, as for example for channel estimation to identify whether a battery powered device to be recharged is in the vicinity of the charger, to transmit or exchange control information, short messages, establish a feedback loop etc. In other words, the apparatus 200 may have a means for communicating with the apparatus 100. The apparatuses 100 and 200 may be configured for communicating with each other, in one embodiment the apparatus 100 is configured for receiving a control information and the apparatus 200 is configured for providing said information. An embodiments of an apparatus 100 may further comprise a means for communicating with an apparatus 200 for providing the effective power from the alternating magnetic field. An embodiment of an apparatus 200 may further comprise a means for communicating with an apparatus 100 for generating the alternating magnetic field. A mobile device may comprise an apparatus 200 according to the above description.

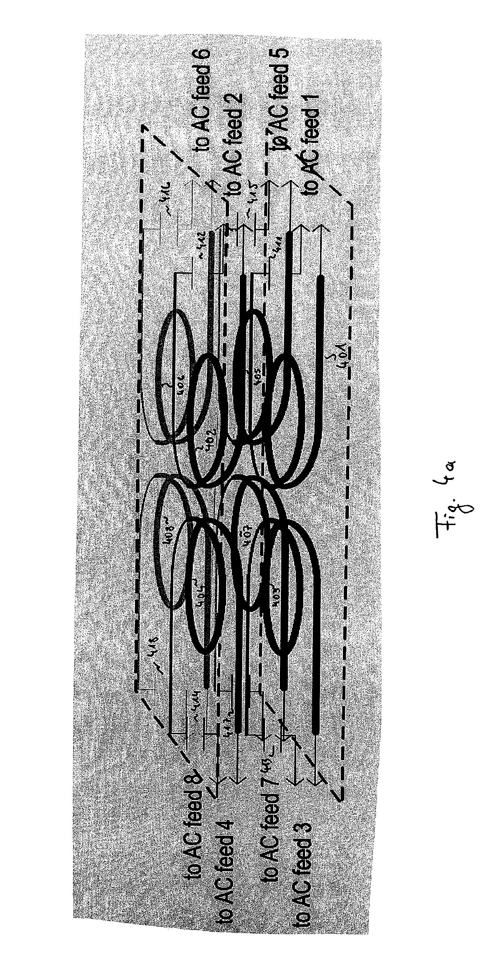

In the following, some embodiments of the apparatus 100 will be detailed using Figs. 4a-4d. Fig. 4a shows an embodiment of an apparatus 100 having eight inductive loops 401-408. Each of the inductive loops 401-408 is coupled to a capacitor 411-418, as indicated in Fig. 4a. Generally, embodiments implemented as wireless charging pads may comprise several coil/capacitor units which can be both stacked as well as placed side by side. Referring to Fig. 4a it can be seen that for example inductive loops 401 and 402 are placed stacked, while for example inductive loops 402 and 406 are placed side by side. In Fig. 4a it is further indicated that each coil/capacitor unit is connected to a separate AC feed which can use distinct time dependent amplitude and phase signals to provide beam forming as controlled by a controller 130, which is not shown in Fig. 4a. Furthermore, the connectors to the feed may be used as sensing connectors while identifying the wireless device which is to be charged and/or for communication purposes with a device to be charged. In other words, the apparatus 100 may comprise a means for communicating with a mobile device, which may use the connectors to the feeds for sensing signals from a wireless device, as for example Bluetooth, RFID (RFID = Radio Frequency IDentification), etc.

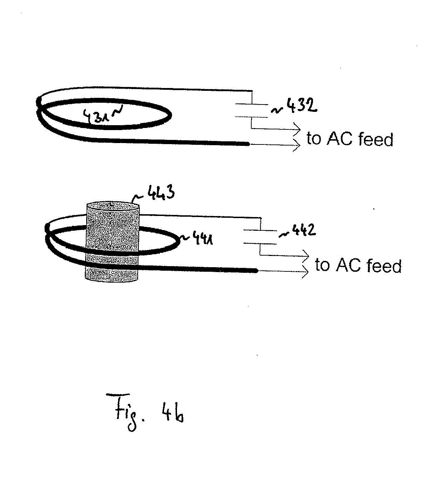

One coil/capacitor, inductive loop/capacitor setup, is schematically sketched in each of the following Figs. 4b-4d. Fig. 4b illustrates an embodiment of a single coil and capacitor, inductive loop and capacitor, combination, eight of which are shown in Fig. 4a. At the top of Fig. 4b an inductive loop 431 followed by a capacitor 432 is shown. At the bottom of Fig. 4b another combination of an inductive loop 441, a capacitor 442 and a metal or ferrit core 443 is depicted.

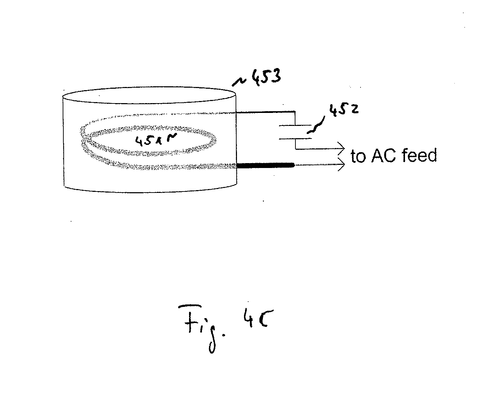

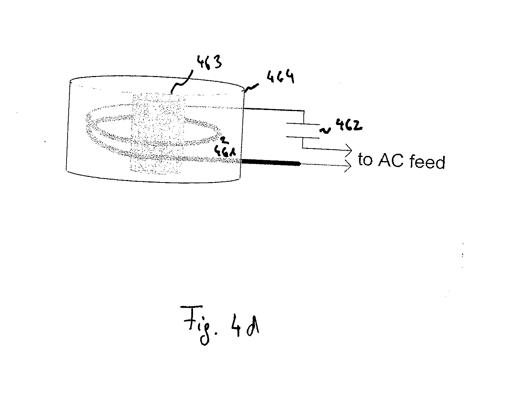

Fig. 4c depicts another embodiment of a combination of an inductive loop 451, a capacitor 452 and a metal housing 453. In other words, in embodiments the first inductive loop 110 or the second inductive loop 120 may have a metal housing as exemplified by the housing 453 in Fig. 4c. Fig. 4d illustrates yet another embodiment of a combination of a coil or inductive loop 461, a capacitor 462 and a metal or ferrit core 463, and a metal housing 464. In other words in embodiments the first inductive loop 110 and/or the second inductive loop 120 may have a capacity coupled therewith, a metal or ferrit core, and/or a metal housing.

Embodiments of the present invention may enable to deploy charging pads and charging system, which can be able of supporting multiple OEM (OEM = other equipment manufacturing) wireless devices, and may be able to support multiple standards. Moreover, embodiments of the apparatus 100 may be able to support more than one wireless device at a time. The apparatus 100 may be operative for being adaptive to known and unknown wireless devices which need to be recharged. Moreover, embodiments of the apparatus 100 may comprise means for wirelessly communicating with a wireless device for device and charging control, operation control, connectivity profiles, identification, etc.

Embodiments of the apparatus 200 may be able to support multiple devices as well. The controller 230 may be configured to adapt to known and unknown wireless devices which need to be recharged. In embodiments, the apparatus 200 can be configured for supporting more than one wireless device at a time. Consequently, an embodiment of the apparatus 200 may be adapted for supporting multiple OEM wireless devices and multiple standards.

In other words, embodiments of the apparatus 100 and 200 may adapt to multiple standards and OEM, charging pads according to the apparatus 100 and wireless devices comprising or having at their disposal an apparatus 200 may be deployed independently. At the same time, embodiments of the apparatus 100 or 200 may have means for adaptation of, for example, a charging pad or the wireless device and may comprise means for identification.

In embodiments, tunable coils or inductive loops and capacitors setups may be used for adaptation of the wireless charging. Embodiments of the apparatus 100 and/or apparatus 200 may comprise tunable or switchable capacitors and resistors which can be accommodated by coils with varying resonance features. Embodiments may therewith be highly adaptive.

Embodiments may use a multitude of coil/capacitor units or inductive loop/capacitor units per charging pad. As indicated in Fig. 4a a setup or embodiment may comprise eight or more inductive loop (401-408)/capacitor (411-418) units. In embodiments, the efficiency of the wireless energy transfer may be improved by using spatial selectivity or beam forming. The beam forming can be accomplished in a combined passive and active approach. The passive part can be accomplished by metal shieldings around the coils or inductive loops and by using ferrit cores or metal cores as it is described above with the help of Figs. 4b-4d. In embodiments, the active part can be accomplished by using feed signals with varying zero phase angles and amplitudes, i.e. the controller 130 may control the zero phase angles and amplitudes of the different feeds, so to accomplish a high efficiency of the wireless energy transfer. This approach may reuse beam forming concepts for far field radio frequency communications.

In embodiments, the combination of the amplitude and zero phase angles of all coil/capacitor units may form a steering vector of the device. In embodiments, in order to support multiple wireless devices multiple steering vectors may be provided at the time, each one supporting one wireless device at the same time. Furthermore, in embodiments, a multitude of resonance frequencies and Q-factors may be supported, in order to support a multitude of wireless devices.

In embodiments of the apparatus 100, the apparatus 100 may further comprise a data base for easy and efficient parameter setups based on the identification of a rechargeable wireless device. In other words, the apparatus 100 may comprise a database, wherein the parameters are associated with identifications. In an embodiment, the apparatus 100 may have means for communicating with a wireless device and for receiving an identification of the wireless device. Having received the identification of the wireless device, the embodiment of the apparatus 100 may retrieve charging and communication parameters from the database based on the identification of the wireless device. Based on these parameters, the embodiment of the apparatus 100 may then select, for example, a frequency for the alternating magnetic field and a certain setup for coil/capacitor units. The database can be evolved autonomously by the wireless charging system as an embodiment and also updated by, for example, a workshop or a maintenance center.

As it has already been mentioned, the apparatus 100 and the apparatus 200 may in embodiments comprise a means for communicating, as for example a wireless communication capability for wireless connectivity, for example, using near field communications (NFC= Near Field Communication), RFID (Radio Frequency Identification), UWB (UWB= Ultra Wideband), Bluetooth, W-LAN (Wireless Local Area Networking), ZigBee, or acoustical and optical communication like e.g. infrared transmission. In addition, a communication between an embodiment of, for example, a charging pad and a wireless device may use multiple communication protocols or a communication profile, as, for example, in Bluetooth. In one embodiment, such a protocol may follow the following steps. The embodiment of the wireless charging pad may identify the vicinity of a wireless device. This can for example be done by a measuring the pressure on its surface which will change when a device is placed on the charging pad. Alternatively, e.g. by means of a random access, it may be done by an infrastructure base communication between a Bluetooth access point and the wireless charging system. The Bluetooth access point may inform the wireless charging pad of the presence of a wireless device, the user may then automatically be informed by the system to place the device close to the charging pad. Then the charging pad can confirm the vicinity.

In a further step, after the charging pad has identified the vicinity of a wireless device, it may establish a communication link, e.g. by broadcasting a random access request. The random access request may be proprietary, coming from the set of non-proprietary messages stored in the aforementioned database or it may in other embodiments be a request using a standard communication link, as, for example, via Bluetooth.

In a further step, the wireless device may recognize the random access request and respond to it, identifying its capabilities with respect to communication and charging parameters. In other words, in embodiments the apparatus 200 may comprise a means for communicating such that the apparatus may provide an identification to the embodiment of an apparatus 100.

In a further step, the embodiment of the apparatus 100, i.e. the charging pad, may identify a preferable way to communicate with the wireless device, having an embodiment of the apparatus 200.

In a further step, the communication link may be established, allowing the controlling of the device while it is charged, for example controlling the battery charging status, the energy flux, feedback on the magnetic field, etc. In another step, the wireless charging may be initiated, which may include adaptation of the charging parameters.

In embodiments, for the case that no communication may be established, the charging pad may carry out a frequency sweep of the resonant induction to identify the charging parameters. This may be done by varying the resonance frequency of the coil/capacitor units of the charging pad and by changing the Q-factor, using controllable capacitors and resistors. In an embodiment, the parameters of identified wireless devices may be stored in the aforementioned database. In such an embodiment, the wireless charging may commence. The time of termination of the charging may be identified by the reduction of the energy flux from the charging pad to the wireless device.

Embodiments of the present invention may provide the advantage that implemented as charging pads they may support multiple wireless devices at a time. Furthermore, they may be adaptive to other devices with other induction parameters, as for example different resonance frequencies. In addition, embodiments may provide wireless communication for, for example, device and charging control, operation control, connectivity profiles, identification, etc.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a Blue-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

**Claims**

1. An apparatus (100) for generating an alternating magnetic field having an effective power and comprising a first magnetic field component and a second magnetic field component, the apparatus (100) comprising:

   a first inductive loop (110) for generating the first magnetic field component having a first amplitude and a first phase;
   a second inductive loop (120) for generating the second magnetic field component having a second amplitude and a second phase; and
   a controller (130) being coupled to the first inductive loop (110) and being coupled to the second inductive loop (120) the controller (130) being configured for setting the first amplitude, the second amplitude, the first phase and the second phase to a first relation and to a second relation, the controller (130) being configured for selecting from the first relation and the second relation the relation for which the effective power of the magnetic field is higher.

2. The apparatus (100) of claim 1, wherein the controller (130) is further configured for controlling the alternating magnetic field by setting a first frequency and a second frequency for the alternation and for selecting from the first and second frequencies the frequency for which the effective power of the alternating magnetic field is higher.

3. The apparatus (100) of one of the claims 1 or 2, further comprising a first capacity coupled to the first inductive loop (110) and/or comprising a second capacity coupled to the second inductive loop (120).

4. The apparatus (100) of one of the claims 1 to 3, wherein the first and/or the second inductive loop (110; 120) is shielded by a metal or ferrit shield, and/or wherein the first and/or the second inductive loop (110; 120) comprises a metal or ferrit core.

5. The apparatus (100) of one of the claims 1 to 4, comprising a plurality of inductive loops for generating a plurality of magnetic field components each having an amplitude and a phase and wherein the controller (130) is coupled to each of the plurality of inductive loops, and wherein the controller (130) is configured for setting the plurality of amplitudes and phases to the first relation and to the second relation and for selecting from the first and second relations the relation for which the effective power of the magnetic field is higher.

6. The apparatus (100) of one of the claims 1 to 5, further comprising a means for communicating with an apparatus (200) for providing the effective power from the alternating magnetic field.

7. The apparatus of one of the claims 1 to 6, wherein the first inductive loop (110) and the second inductive loop (120) are facing similar geometrical directions and/or wherein the first inductive loop (110) and the second inductive loop (120) are facing different geometrical directions.

8. A method for generating an alternating magnetic field having an effective power and comprising a first magnetic field component and a second magnetic field component, comprising the steps of
generating the first magnetic field component having a first amplitude and a first phase;
generating the second magnetic field component having a second amplitude and a second phase;
setting the first and second amplitudes and/or the first and second phases to a first relation;
setting the first and second amplitudes and/or the first and second phases to a second relation; and
selecting from the first and second relation the relation for which the effective power of the magnetic field is higher.

9. An apparatus (200) for providing an effective power from an alternating magnetic field, the apparatus (200) comprising
a first inductive loop (210) for providing a first voltage signal having a first amplitude and a first phase from the alternating magnetic field;
a second inductive loop (220) for providing a second voltage signal having a second amplitude and a second phase from the alternating magnetic field; and
a controller (230) being coupled to the first inductive loop (210) and being coupled to the second inductive loop (220), the controller (230) being configured for combining the first and the second voltage signals using a first relation for the first and second amplitudes and/or for the first and second phases and using a second relation for the first and second amplitudes and/or for the first and second phases, the controller (230) being configured for selecting from the first and second relation the relation for which the effective power is higher.

10. The apparatus (200) of claim 9, wherein the first inductive loop (210) and the second inductive loop (220) are facing similar geometric directions and/or wherein the first inductive loop (210) and the second inductive loop (220) are facing different geometric directions.

11. The apparatus (200) of one of the claims 9 or 10, comprising a first capacity being coupled to the first inductive loop (210) and/or comprising a second capacity being coupled to the second inductive loop (220).

12. The apparatus (200) of one of the claims 9 to 11, comprising a plurality of inductive loops for providing a plurality of voltage signals each having an amplitude and a phase, wherein the controller (230) is coupled with each of the plurality of inductive loops and wherein the controller (230) is configured for setting the plurality of amplitudes and/or phases to the first and the second relation and for selecting from the first and second relation the relation for which the effective power is higher.

13. The apparatus (200) of one of the claims 9 to 12 further comprising a means for communicating with an apparatus (100) for generating the alternating magnetic field.

14. A method for providing an effective power from an alternating magnetic field, comprising the steps of
providing a first voltage signal having a first amplitude and a first phase from the alternating magnetic field;
providing a second voltage signal having a second amplitude and a second phase from the alternating magnetic field;
combining the first and the second voltage signals using a first relation for the first and second amplitudes and/or for the first and second phases;
combining the first and the second voltage signals using a second relation for the first and second amplitudes and/or for the first and second phases; and
selecting from the first and second relation the relation for which the effective power is higher.

15. Computer program having a program code for performing one of the methods of claims 8 or 14, when the program code runs on a computer or processor.

Controller

130

~ 110

~ 120

100?

Fig. 1a

Fig. 16

Fig. 1c

Fig 2a

effective power

Controller 230

220 210

200 Fig. 2b

Fig. 3a

Fig. 36

EP 2 346 136 A1

Fig. 3 c

Fig. 3d

Fig. 4a

to AC feed

431

432

443

441

442

to AC feed

Fig. 4b

Fig. 45

to AC feed

461

462

463

464

Fig. 4d

Europäisches
Patentamt

European
Patent Office

Office européen
des brevets

# EUROPEAN SEARCH REPORT

**Application Number**

EP 10 15 0652

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/243394 A1 (LEVINE RICHARD C [US]) 1 October 2009 (2009-10-01)<br><br>* paragraphs [0008] - [0010] *<br>* figure 1 *<br>* paragraphs [0023] - [0027] *<br>* paragraph [0030] *<br>* paragraph [0032] *<br>* paragraphs [0035] - [0039] *<br>* paragraph [0041] *<br>* paragraph [0043] *<br>* paragraph [0062] *<br>* paragraph [0080] *<br>* figure 2 *<br>* claim 9 * | 1-3, 5-11,14, 15 | INV.<br>H02J5/00<br>H02J7/02 |
| X | WO 2008/051611 A2 (FARKAS LASZIO [US]; FARKAS LASZIO [US] FARKAS LASZLO [US]) 2 May 2008 (2008-05-02)<br>* paragraph [0028] *<br>* paragraph [0034] *<br>* paragraph [0036] *<br>* paragraph [0041] *<br>* paragraphs [0043] - [0044] *<br>* paragraph [0049] *<br>* paragraph [0062] *<br>* paragraph [0065] *<br>* figures 1,2,4,6a-c,8a-c,9 * | 1,3-5, 7-12,14, 15 | |
| | | | **TECHNICAL FIELDS SEARCHED (IPC)**<br><br>H02J<br>H01F |
| A | US 2008/309452 A1 (ZEINE HATEM [US]) 18 December 2008 (2008-12-18)<br>* the whole document * | 1-15 | |
| A | US 2009/001941 A1 (HSU FENG-HSIUNG [US] ET AL) 1 January 2009 (2009-01-01)<br>* the whole document * | 1-15 | |

The present search report has been drawn up for all claims

| Place of search | Date of completion of the search | Examiner |
|---|---|---|
| The Hague | 16 December 2010 | Rocha, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 346 136 A1

**ANNEX TO THE EUROPEAN SEARCH REPORT
ON EUROPEAN PATENT APPLICATION NO.** EP 10 15 0652

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2010

| Patent document cited in search report | | Publication date | Patent family member(s) | | Publication date |
|---|---|---|---|---|---|
| US 2009243394 | A1 | 01-10-2009 | NONE | | |
| WO 2008051611 | A2 | 02-05-2008 | EP | 2078330 A2 | 15-07-2009 |
| | | | US | 2008265684 A1 | 30-10-2008 |
| US 2008309452 | A1 | 18-12-2008 | CN | 101711450 A | 19-05-2010 |
| | | | EP | 2160814 A2 | 10-03-2010 |
| | | | JP | 2010530210 T | 02-09-2010 |
| | | | KR | 20100029245 A | 16-03-2010 |
| | | | WO | 2008156571 A2 | 24-12-2008 |
| US 2009001941 | A1 | 01-01-2009 | CN | 101689765 A | 31-03-2010 |
| | | | EP | 2168223 A2 | 31-03-2010 |
| | | | WO | 2009006125 A2 | 08-01-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WILLIAM C. BROWN.** The History of Power Transmission by Radio Waves. *IEEE transactions on microwave theory and techniques,* September 1984, vol. MTT-32 (9
- **ARISTEDIS KARALIS et al.** Efficient wireless non-radiative mid-range energy transfer. *Annals of Physics,* 2008, vol. 323, 34-38

- **PHILLIPS.** *Wireless Charging for Mobile Devices,* 17 June 2008, http://www.research.phillips.com/technologies/projects/wireless-charging.html
- **HIROKI YOMOGITA.** Non-contact Charging System Simultaneously Charges Multiple Mobile Devices. *Nikkei Electronics,* 2008
- **DAVIDE CASTELVECCHI.** Wireless energy may power electronics. *MIT TechTalk,* 15 November 2006, vol. 51 (9